# NEUE EUROPÄISCHE PATENTSCHRIFT

(11) **EP 1 990 513 B2**
(45) Veröffentlichungstag und Bekanntmachung des Hinweises auf die Entscheidung über den Einspruch: **24.09.2014**
(45) Hinweis auf die Patenterteilung: 15.12.2010
(21) Anmeldenummer: 08006492.6
(22) Anmeldetag: 31.03.2008
(51) Int. Cl.: F01N 3/20, B01D 53/94, B01F 5/04

(54) **Vorrichtung zum Verteilen von fließfähigen Zusatzstoffen in Abgasanlagen**
Device for distributing liquid substances in exhaust gas systems
Dispositif de distribution d'additifs liquide dans des installations des gaz d'échappement

(30) Priorität: 08.05.2007 DE 102007021598
(43) Veröffentlichungstag der Anmeldung: 12.11.2008
(73) Patentinhaber: Friedrich Boysen GmbH & Co. KG, 72213 Altensteig (DE); Bayerische Motoren Werke Aktiengesellschaft, 80809 München (DE)
(72) Erfinder: Kornherr, Heinz, 71069 Sindelfingen (DE); Müller, Michael, 72202 Nagold (DE); Schoenberger, Klaus, 4491 Niederneukirchen (AT); Aichhorn, Bernhard, 4040 Linz (AT); Barnstedt, Gert, 4441 Behamberg (AT); Brüne, Hans-Jürgen, 3350 Stadt Haag (AT)
(74) Vertreter: Manitz, Finsterwald & Partner GbR

(56) Entgegenhaltungen:
- EP-A- 1 022 048
- EP-A- 1 712 751
- EP-A- 1 770 253
- EP-A1- 1 953 359
- EP-A2- 0 417 383
- EP-A2- 0 972 560
- EP-A2- 1 712 751
- EP-A2- 1 985 356
- WO-A-2005/073524
- WO-A1-99/39815
- WO-A1-2005/073524
- DE-A1- 3 536 315
- DE-A1- 10 060 808
- DE-A1- 10 201 042
- DE-A1- 10 248 294
- DE-A1- 10 248 586
- DE-C1- 19 806 265
- US-B1- 6 449 947

## Beschreibung

Die vorliegende Erfindung betrifft eine Vorrichtung zum Verteilen von fließfähigen Zusatzstoffen in Abgasanlagen einer Brennkraftmaschine, insbesondere zum Verteilen eines Wasser-Harnstoff-Gemisches in einer Abgasanlage eines Dieselmotors, mit einer insbesondere vor einem sogenannten SCR-Katalysator in den Abgasstrang mündenden Einspritzeinrichtung.

Aufgrund der schärfer werdenden Abgasvorschriften für Dieselmotoren wird es erforderlich, Stickoxide im Abgas zu reduzieren. Eine bekannte Möglichkeit besteht darin, die Stickoxide in einer sogenannten selektiven katalytischen Reduktion zu Stickstoff und Wasser zu reduzieren. Dies erfolgt in einem sogenannten SCR-Katalysator unter Verwendung eines in das Abgas eingespritzten Reduktionsmittels. Insbesondere wird hierfür ein Wasser-Harnstoff-Gemisch verwendet, dessen Harnstoff im Abgas zu Ammoniak zerfällt, welches mit den Stickoxiden reagiert. Wichtig ist es dabei, dass das Abgas möglichst gleichmäßig mit dem Reduktionsmittel vermischt wird und dass der Zusatzstoff so gut wie möglich verdampft wird, um einen möglichst großen Wirkungsgrad bei der Reduktion zu erreichen.

Die WO 2005/073524 A1 offenbart eine Vorrichtung nach dem Oberbegriff der unabhängigen Ansprüche.

Der Erfindung liegt die Aufgabe zugrunde, die Verteilung der Zusatzstoffe im Abgas zu verbessern und die Verdampfung erhöhen.

Die Aufgabe wird durch den unabhängigen Anspruch gelöst. Bevorzugte Weiterbildungen und erfindungsgemäße Ausführungsformen sind in den abhängigen Ansprüchen angegeben.

Nach einer weiteren Ausgestaltung der Erfindung, die ebenfalls für sich beansprucht wird, weist mindestens ein in der Vorrichtung vorhandenes Blech an seinem abgasstromabwärtigen Ende eine Verjüngung auf. Diese Verjüngung kann nach einer nicht erfindungsgemäßen Alternative in einer Anfasung bestehen. Sie hat den Vorteil, dass sich am Ende des Bleches bildende Tröpfchen des Zusatzstoffes klein bleiben. Durch die Verjüngung strömt das Abgas nämlich am Blechende zusammen und beaufschlagt die Tröpfchen, die sich dadurch von dem Blech lösen. Ohne eine solche Verjüngung könnten sich quasi im Windschatten des Bleches größere Tröpfchen bilden, die sich nur schwer vom Blech lösen.

Erfindungsgemäß weist das Blech am Ende mindestens eine in Abgasstromrichtung weisende Spitze auf. Auch hierdurch wird erreicht, dass sich keine großen Tröpfchen bilden können. Erfindungsgemäß ist dabei eine Art Sägezahnstruktur am Ende des Bleches. Dabei sollte der Abstand zwischen den Zähnen so groß gewählt sein, dass sich zwischen den Zähnen keine Tropfen festhalten können.

Derartige Verjüngungen können an allen Blechen der Vorrichtung vorgesehen sein, also insbesondere an vorhandenen Prallblechen, an den Enden der Gasleitschaufeln und an Abgasrohren wie dem die Gasleitschaufeln umgebenden Rohr und eventuell vorhandenen zusätzlichen Verdampferrohren.

Nach einer weiteren Ausgestaltung der Erfindung ist die Oberfläche mindestens eines Blechs der Vorrichtung strukturiert oder perforiert ausgebildet. Eine solche Strukturierung oder Perforierung vergrößert zum Einen die Oberfläche des Bleches und verbessert damit die Verdampfungsleistung. Des Weiteren wird dadurch das sogenannte Leidenfrostphänomen unterdrückt, welches bewirkt, dass sich unter anhaftenden Tropfen eine Dampfschicht bildet, die den Tropfen gegenüber dem Blech isoliert und damit einer Verdampfung entgegenwirkt. Weiterhin werden dadurch auf dem Blech vorhandene Tröpfchen mechanisch zerkleinert, wodurch wiederum die Verdampfung verbessert wird. Auch haften die kleineren Tröpfchen besser auf dem Blech, so dass sich diese länger auf dem Blech halten und sich die Verdampfungszeit erhöht.

Zur Strukturierung der Oberfläche kann diese nach einer Ausgestaltung der Erfindung glasperlgestrahlt sein. Darüber hinaus kann die Oberfläche mit einem Gitter versehen oder aus Strukturblech gebildet sein. Hierdurch wird jeweils die gewünschte Strukturierung, insbesondere eine Mikrostruktur, der Oberfläche erreicht.

Nach einer weiteren Ausgestaltung der Erfindung besteht das Blech der Vorrichtung aus ferritischem Edelstahl. Die Verwendung von ferritischem Edelstahl hat den Vorteil, dass dessen Wärmeleitwert höher ist als beispielsweise von austenitischem Stahl. Dadurch ergibt sich vorteilhafterweise eine geringere lokale Abkühlung der betroffenen Elemente und damit wiederum eine schnellere Erwärmung des Zusatzstoffes.

Ausführungsbeispiele der Erfindung sind in den Zeichnungen dargestellt und werden nachfolgend beschrieben. Es zeigen, jeweils in schematischer Darstellung,
- Fig. 1: eine perspektivische Ansicht einer erfindungsgemäßen Vorrichtung mit Blickrichtung auf die Gaseintrittsöffnung,
- Fig. 2: eine perspektivische Ansicht der Vorrichtung von Fig. 1 mit Blickrichtung auf die Gasaustrittsseite,
- Fig. 3: eine Draufsicht auf die Gaseintrittsseite der Vorrichtung von Fig. 1,
- Fig. 4: eine Draufsicht auf die Gasaustrittsseite der Vorrichtung von Fig. 1,
- Fig. 5: einen Schnitt gemäß Linie V-V in Fig. 3,
- Fig. 6: einen Schnitt gemäß Linie VI-VI in Fig. 3, und
- Fig. 7: eine perspektivische Ansicht einer Variante einer nicht erfindungsgemäßen Vorrichtung.

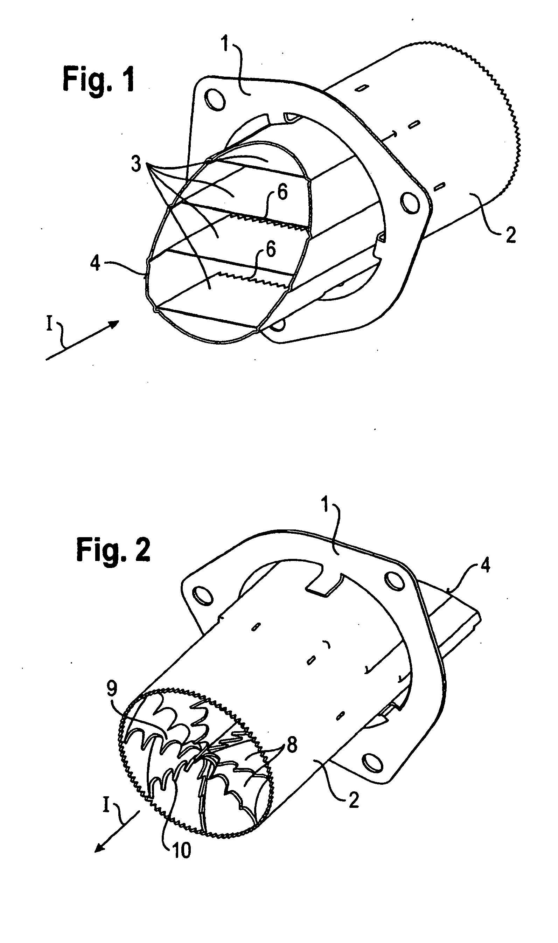

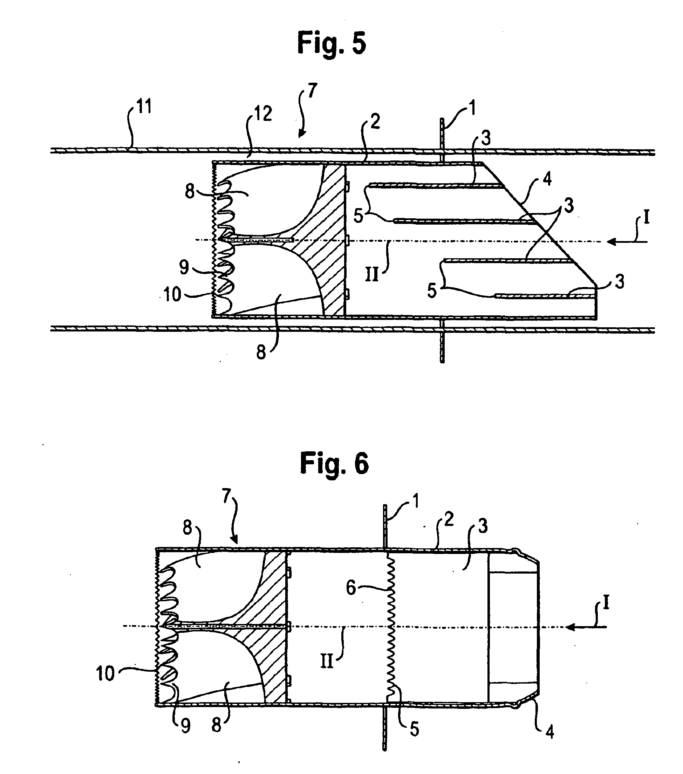

Die in den Fig. 1 bis 6 dargestellte Vorrichtung umfasst ein mit einem Flansch 1 versehenes Abgasmischerrohr 2, welches abgaseintrittsseitig abgeschrägt ausgebildet ist. Im Inneren des Abgasmischerrohres 2 befinden sich vier Prallplatten 3, die parallel zur Abgasstromrichtung I und mit etwa gleichem Abstand übereinander angeordnet sind. Die Prallplatten 3 schließen im Wesentlichen bündig mit der schrägen Abgaseintrittsseite 4 des Abgasmischerrohres 2 ab und weisen eine untereinander in etwa gleiche Länge auf. Sie erstrecken sich dadurch unterschiedlich weit in das Abgasmischerrohr 2 hinein, wie man insbesondere in Fig. 5 erkennt. Die oberste Prallplatte 3 endet etwa in der Mitte des Abgasmischerrohres 2. An ihrem abgasstromabwärtigen Ende 5 sind die Prallplatten 3 angefast und gezahnt ausgebildet, wie man insbesondere in Fig. 6 erkennt. Die Anfasung kann dabei bis auf eine Dicke von beispielsweise 0,2 mm vorgesehen sein. Der Abstand der Zähne 6 beträgt bevorzugt zwischen ca. 4 und ca. 6 mm.

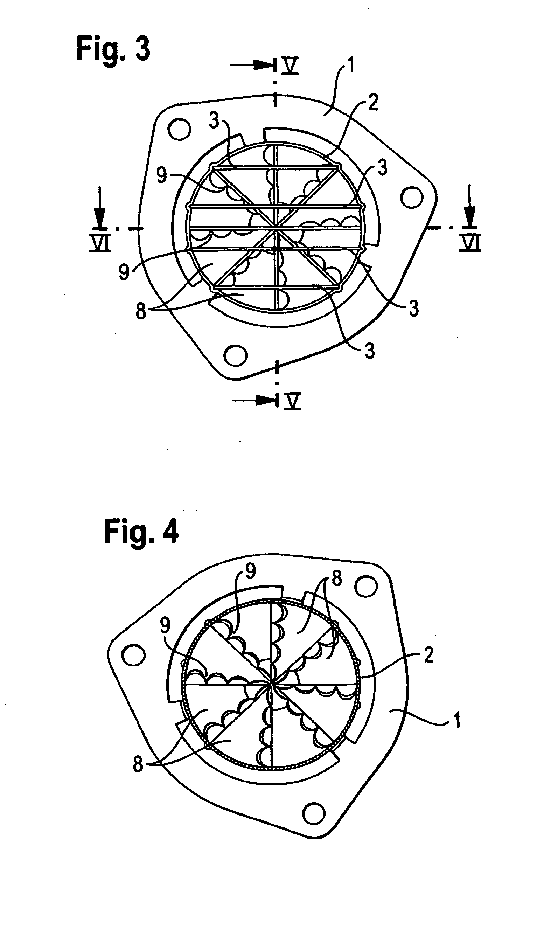

In Abgasstromrichtung I hinter den Prallplatten 3 ist im Abgasmischerrohr 2 eine Drallerzeugungseinrichtung 7 vorgesehen. Diese besteht aus turbinenartig angeordneten und ausgebildeten Gasleitschaufeln 8. Das heißt, die Gasleitschaufeln 8 verlaufen im Wesentlichen radial von der Längsmittelachse II des Abgasmischerrohres 2 radial nach außen, sind jedoch in sich gebogen, so dass ihre Berührungslinie mit dem Abgasmischerrohr 2 längs einer Spirallinie verläuft. Dadurch ergibt sich eine starke Verblockung des Querschnitts des Abgasmischerrohres 2, wie man insbesondere in Fig. 4 erkennt. Wie dargestellt, sind insgesamt acht Gasleitschaufeln 8 vorgesehen, die gleichmäßig um die Längsmittelachse II des Abgasmischerrohres 2 angeordnet sind.

An ihrem abgasstromabwärtigen Ende sind die Gasleitschaufeln 8 der Drallerzeugungseinrichtung 7 mit spitzen Zacken 9 versehen. Die Spitzen 10 der Zacken 9 weisen in etwa in Abgasstromrichtung I. Die Zacken weisen eine Länge von bis zu bevorzugt 10 mm auf und wiederum einen Abstand von ca. 4 bis ca. 6 mm. Das Verhältnis der Länge der Gasleitschaufeln 8 zu ihrer Breite beträgt bevorzugt ca. 1,5 bis 2 zu 1. Damit ergibt sich die gewünschte große Verblockung des Querschnitts des Mischerrohres 2 bei gleichzeitig noch akzeptablem Gegendruck.

Wie in Fig. 5 dargestellt, kann die gezeigte Vorrichtung in einem Außenrohr 11 angeordnet werden. Zwischen dem Außenrohr 11 und dem Abgasmischerrohr 2 ist ein Luftspalt 12 vorgesehen. Der Flansch 1 ist mit dem Außenrohr 11 fest verbunden. Zwischen dem Flansch 1 und dem Abgasmischerrohr 2 besteht dagegen ein Schiebesitz.

Zusätzlich zu dem dargestellten Abgasmischerrohr 2 kann in dem Außenrohr 11 noch ein hier nicht dargestelltes zusätzliches Verdampferrohr hinter dem Abgasmischerrohr 2 angeordnet sein, welches insbesondere ein Außenrohr und mindestens ein Innenrohr umfasst. Dieses zusätzliche Verdampferrohr weist dabei bevorzugt an seinem stromabwärtigen Ende eine leichte Auftulpung auf.

Die Oberflächen der Bestandteile der erfindungsgemäßen Vorrichtung, nämlich insbesondere die Prallbleche 3, die Gasleitschaufeln 8 und das zusätzliche Verdampferrohr, aber auch das Abgasmischerrohr 2 sind bevorzugt mit einer strukturierten oder perforierten Oberfläche versehen. Beispielsweise können die Oberflächen glasperlgestrahlt sein, oder sie können durch ein Gitter gebildet sein.

Die Funktionsweise der dargestellten Vorrichtung ist wie folgt:

Das Abgas strömt gemäß Pfeil I in das Außenrohr 11 und durchströmt das Abgasmischerrohr 2. Dabei werden das Abgasmischerrohr 2, die Prallplatten 3 und die Gasleitschaufeln 8 von dem Abgas erwärmt. Das aus dem Abgasmischerrohr 2 austretende Abgas gelangt anschließend in einen SCR-Katalysator. Zur Erzeugung einer Reduktion von Stickoxiden im SCR-Katalysator wird in das Außenrohr 11 unter einem Winkel zur Abgasströmungsrichtung I vor dem Abgasmischerrohr 2 ein Wasser-Harnstoff-Gemisch eingespritzt. Im dargestellten Ausführungsbeispiel weist die nicht dargestellte Einspritzeinrichtung vier Einspritzdüsen auf, die jeweils einer Prallplatte 3 zugeordnet sind. Das heißt, jeder der vier Strahlen trifft auf eine der Prallplatten 3 auf, wird von dieser zurückgeworfen und dabei aufgefächert. Dadurch ergibt sich eine gute Verteilung des eingespritzten Gemisches im Abgasstrom. Das auf die Prallplatten 3 auftreffende Gemisch wird außerdem durch die heißen Prallplatten 3 erwärmt, so dass bereits eine Verdampfung des Gemisches beginnt. Das Gemisch gelangt dann mit dem Abgas in die Drallerzeugungseinrichtung 7, wo das Abgas mit dem Gemisch in eine Rotation um die Längsmittelachse II des Abgasmischerrohres 2 versetzt wird. Dadurch erfolgt eine gute Durchmischung des Abgases mit dem Wasser-Harnstoff-Gemisch. Zudem wirken auch die Gasleitschaufeln 8 der Drallerzeugungseinrichtung 7 als Verdampferfläche.

Nach Austritt aus dem Abgasmischerrohr 2 gelangt das Abgas gegebenenfalls in ein weiteres Verdampferrohr, welches ein Außenrohr und ein oder mehrere Innenrohre umfassen kann. Hier können eventuell noch vorhandene flüssige Anteile des Gemischs verdampft werden, so dass dann nur noch gasförmiges Reduktionsmittel in den SCR-Katalysator gelangt. In diesem erfolgt dann die Reduktion von Stickoxiden zu Stickstoff und Wasser.

Durch die strukturierten oder perforierten Oberflächen der Elemente der erfindungsgemäßen Vorrichtung wird die Zerstäubung und Verteilung des Gemisches weiter verbessert. Zudem werden Tröpfchen des Gemisches zerkleinert und diese länger auf den Verdampferflächen gehalten. Andererseits lösen sich die Tröpfchen des Gemisches leichter von den Enden der Prallplatten 3 durch die Zähne 6 und von den Gasleitschaufeln 8 durch die Zähne 9. Das Entstehen von großen Tröpfchen, die dann schwer verdampft werden können, wird verhindert. Durch den Schiebesitz des Abgasmischerrohres 2 in dem Außenrohr 11 kann ersteres außerdem mit einer verhältnismäßig geringen Wandstärke ausgebildet sein, so dass sich das Abgasmischerrohr 2 schnell durch das Abgas erwärmt. Dadurch ist die Wirksamkeit der Verdampfungseinrichtung schnell gegeben.

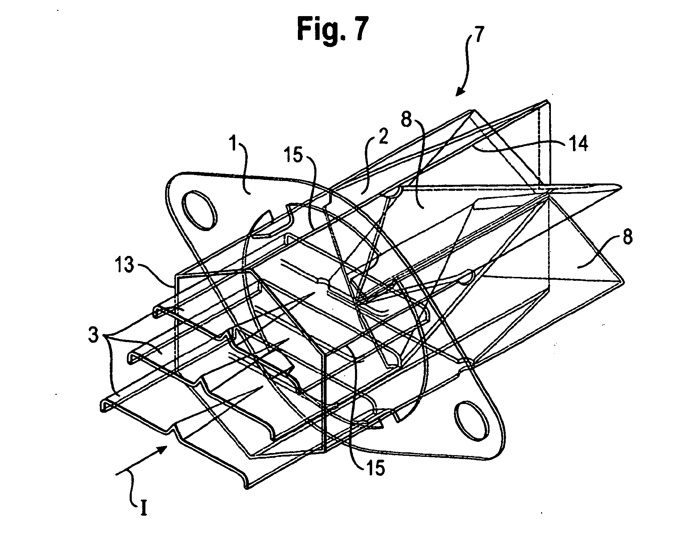

Fig. 7 zeigt schließlich noch eine Variante der nicht erfindungsgemäßen Vorrichtung, bei welcher die Drallerzeugungseinrichtung 7 durch das Abgasmischerrohr 2 selbst gebildet ist. Hierzu ist die Rohrwandung 13 des Abgasmischerrohres 2 mit Einschnitten 14 versehen, die von der abgasstromabwärtigen Seite in das Abgasmischerrohr 2 geführt sind. Im Bereich dieser Abschnitte 14 ist die Rohrwandung 13 jeweils nach innen umgebogen, so dass sich turbinenartig angeordnete Leitschaufeln 8 ergeben. Das Abgasmischerrohr 2 ist hier im Querschnitt sechseckig ausgebildet, und die Einschnitte 14 sind jeweils längs einer Kante 15 des Abgasmischerrohres 2 geführt. Dadurch ergibt sich eine verhältnismäßig einfache Herstellbarkeit des Abgasmischerrohres mit sechs eingeformten Gasleitschaufeln 8. Durch diese Art der Herstellung ist die Drallerzeugungseinrichtung 7 einstückig mit dem Abgasmischerrohr 2 ausgebildet, so dass kein Spalt gebildet ist. Die Funktionsweise ist wie bei der Variante der Fig. 1 bis 6.

### Bezugszeichenliste

- 1: Flansch
- 2: Abgasmischerrohr
- 3: Prallplatte
- 4: Stirnseite von 2
- 5: Ende von 3
- 6: Zahn
- 7: Drallerzeugungseinrichtung
- 8: Gasleitschaufel
- 9: Zahn
- 10: Spitze von 9
- 11: Außenrohr
- 12: Luftspalt
- 13: Rohrwandung
- 14: Einschnitt
- 15: Kante

- I: Abgasströmungsrichtung
- II: Längsmittelachse von 2

## Patentansprüche

1. Vorrichtung zum Verteilen von fließfähigen Zusatzstoffen in Abgasanlagen einer Brennkraftmaschine, insbesondere zum Verteilen eines Wasser-Harnstoff-Gemisches in einer Abgasanlage eines Dieselmotors, mit einer insbesondere vor einem sogenannten SCR-Katalysator in den Abgasstrang mündenden Einspritzeinrichtung und mit mindestens einem im Abgasstrang angeordneten Blech (3, 8),
**dadurch gekennzeichnet, dass**
das abgasstromabwärtige Ende (5) des Blechs (3, 8) Verjüngungen aufweist, wobei die Verjüngungen durch eine Art Sägezahnstruktur ausgebildet sind, wobei die Spitzen (10) der die Sägezahnstruktur bildenden Zähne (6, 9) in Abgasstromrichtung (I) weisen.

2. Vorrichtung nach Anspruch 1,
**dadurch gekennzeichnet, dass**
die Oberfläche mindestens eines in der Vorrichtung vorhandenen Bleches (3, 8) strukturiert oder perforiert ist.

3. Vorrichtung nach Anspruch 2,
**dadurch gekennzeichnet, dass**
die Oberfläche glasperlgestrahlt ist.

4. Vorrichtung nach Anspruch 2,
**dadurch gekennzeichnet, dass**
die Oberfläche durch ein Gitter gebildet ist.

5. Vorrichtung nach einem der vorhergehenden Ansprüche,
**dadurch gekennzeichnet, dass**
das Blech aus ferritischem Edelstahl besteht.

## Claims

1. An apparatus for the distribution of flowable additives in exhaust gas systems of an internal combustion engine, in particular for the distribution of a water/urea mixture in an exhaust gas system of a diesel engine, having an injection device in particular opening into the exhaust tract before a so-called SCR catalytic converter and having at least one metal part (3, 8) arranged in the exhaust gas tract
**characterised in that**
the end (5) of the metal part (3, 8) downstream of the exhaust gas flow has tapered portions, with the tapered portions being formed by a type of saw tooth structure, with the tips (10) of the teeth (6, 9) forming the saw tooth structure facing in the exhaust gas flow direction (I).

2. An apparatus in accordance with claim 1,
**characterised in that**
the surface of at least one metal part (3, 8) present in the apparatus is structured or perforated.

3. An apparatus in accordance with claim 2,
**characterised in that**
the surface is glass bead blasted.

4. An apparatus in accordance with claim 2,
**characterised in that**
the surface is formed by a grating.

5. An apparatus in accordance with any one of the preceding claims,
**characterised in that**
the metal part comprises ferrite stainless steel.

## Revendications

1. Dispositif de distribution d'additifs capables de s'écouler dans des installations de gaz d'échappement de moteurs à combustion interne, en particulier pour distribuer un mélange eau-urée dans une installation de gaz d'échappement d'un moteur diesel, comprenant un système d'injection qui débouche dans le circuit des gaz d'échappement en particulier avant un catalyseur dit catalyseur "SCR", et comprenant au moins une tôle (3, 8) agencée dans le circuit des gaz d'échappement,
**caractérisé en ce que**
l'extrémité (5) de la tôle (3, 8) en aval vis-à-vis de l'écoulement des gaz d'échappement comporte des rétrécissements (6, 9), dans lequel les rétrécissements sont réalisés par une sorte de structure en dents de scie, et les pointes (10) des dents (6, 9) constituant la structure en dents de scie étant dirigées dans la direction d'écoulement des gaz d'échappement.

2. Dispositif selon l'une la revendication 1,
**caractérisé en ce que** la surface d'au moins une tôle (3, 8) présente dans le dispositif est structurée ou perforée.

3. Dispositif selon la revendication 2,
**caractérisé en ce que** la surface est sablée.

4. Dispositif selon la revendication 2,
**caractérisé en ce que** la surface est formée par un grillage.

5. Dispositif selon l'une des revendications précédentes,
**caractérisé en ce que** la tôle est en acier spécial ferritique.
